# EUROPÄISCHE PATENTANMELDUNG

(11) **EP 2 520 822 A2**
(43) Veröffentlichungstag der Anmeldung: **07.11.2012**
(21) Anmeldenummer: 12161376.4
(22) Anmeldetag: 27.03.2012
(51) Int. Cl.: F16F 1/18, F16F 3/02

(54) **Federträger mit einer Tragfeder**

(30) Priorität: 03.05.2011 DE 102011075148
(71) Anmelder: ZF Friedrichshafen AG, 88038 Friedrichshafen (DE)
(72) Erfinder: Nowotka, Thomas, 97539 Wonfurt (DE)

(57) **Zusammenfassung**

Es wird ein Federträger mit einer Tragfeder vorgeschlagen, umfassend zwei teleskopierende Baugruppen, wobei die Baugruppen jeweils einen Anlageabschnitt zur Anlage der Tragfeder an dem Federträger aufweisen und wobei die Tragfeder mindestens zwei Federelemente umfasst.

Dieser Federträger zeichnet sich gemäß der vorliegenden Erfindung dadurch aus, dass jedes Federelement als ein separates Bauteil ausgeführt ist und zwei Schenkel aufweist, welche unter Bildung einer C-Form an einer Seite über einen Verbindungsabschnitt miteinander verbunden sind, wobei die dem Verbindungsabschnitt gegenüberliegende Seite eines jeden Schenkels dessen freies Ende ausbildet und wobei die Federelemente in Richtung der Längsachse des Federträgers aufeinander gestapelt sind, wobei die Schenkel der Federelemente in der Tragfeder gleichsinnig zueinander und quer zu der Längsachse des Federträgers ausgerichtet sind und wobei die Verbindungsabschnitte der Federelemente bezogen auf die Längsachse des Federträgers radial in die gleiche Richtung weisen und die freien Enden der Schenkel der Federelemente ebenfalls gleichsinnig zueinander, jedoch in die entgegengesetzte Richtung als die Verbindungsabschnitte radial ausgerichtet sind.

## Beschreibung

Die Erfindung betrifft einen Federträger mit einer Tragfeder, gemäß dem Oberbegriff des Patentanspruchs 1. Ein derartiger Federträger findet zum Beispiel als ein Federbein eines Kraftfahrzeugs seine Verwendung.

In der heutigen Zeit wird es immer wichtiger umweltschonende und ressourcenschonende Kraftfahrzeuge zu produzieren. Um den CO2-Ausstoß der Kraftfahrzeuge reduzieren zu können, tendieren die Automobilhersteller dazu, immer leichtere Kraftfahrzeuge mit kleineren Motoren zu entwickeln. Dabei ist es wichtig, die Gewichteinsparpotentiale in einem Fahrzeug zu lokalisieren und diese auszunutzen. Ein Federträger in einem Kraftfahrzeug birgt solch ein Gewichteinsparpotential. Federträger kombinieren gewöhnlich eine Baueinheit, welche zwei teleskopierende Baugruppen aufweist, wie beispielsweise ein Schwingungsdämpfer, mit einer Tragfeder. Die Tragfeder wird in der Regel aus Stahldraht gefertigt und ist vielfach die schwerste Komponente eines Federträgers.

Ebenfalls sehr hoch sind die heutzutage geltenden Anforderungen an den Fahrkomfort. Dabei unterscheiden sich die Komfortanforderungen von Automobilherstellern in diversen Fahrzeugmodellen und Ausführungsvarianten. So zeichnen sich zum Beispiel die Sportausführungen durch eine viel straffere Federung aus, als die Familienfahrzeuge. So soll der Federträger so ausgelegt sein, dass die definierten Komfortanforderungen erfüllt, sowie ein hohes Maß an Steuerbarkeit und Kontrollierbarkeit eines Fahrzeugs im Fahrbetrieb gegeben ist. Durch den Einsatz einer Feder, deren Federkraft bei steigender Belastung stark progressiv ansteigt würde man bei einer normal belasteten Tragfeder, zu einer relativ weichen Abstimmung des Federträgers gelangen, was einen hohen Fahrkomfort ermöglicht. In Extremsituationen dagegen, also bei einer starken Tragfederbelastung, würde man eine straffe Reaktion des Federträgers erreichen, welche die Steuerbarkeit des Fahrzeugs unterstützt.

Die DE 10 2008 006 411 A1 offenbart eine aus Faserverbundstoff als Bandfeder ausgeführte Tragfeder für den Einsatz in einer Dämpferanordnung eines Kraftfahrzeugs. Diese Bandfeder weist einen wellenförmigen Verlauf auf, wobei diese als einzelner Wellenzug aus Umkehrbereichen und Zwischenabschnitten um eine Längsmittellinie mäandert. Die in der DE 10 2008 006 411 A1 offenbarte Feder weist eine Ausgestaltung auf, welche gleichmäßige Spannungszustände in der gesamten belasteten Feder erreichen und dadurch günstige Belastungsverhältnisse und lange Lebensdauer ermöglichen soll. Durch die gewollt gleichmäßige Belastung der gesamten Feder ergibt sich eine relativ flache und nur mäßig progressive Federkennlinie, welche das oben erläuterte Problem nicht lösen kann.

Aus der DE 10 2008 024 585 A1 ist ein Federträger mit einer Tragfeder bekannt, dessen Tragfeder ein erstes und ein zweites Federband aufweist, wobei die beiden Federbänder einen bezogen auf die Längsachse der Tragfeder wellenförmigen Verlauf aufweisen, wobei diese parallel zu der Längsachse des Schwingungsdämpfers angeordnet sind. Die beiden Federbänder sind an den Enden mittels eines Verbindungsstegs fest miteinander verbunden. Die offenbarte Tragfeder ist aus einem Faserverbundwerkstoff ausgeführt und für die Verwendung in einer Feder-Dämpfer-Anordnung eines Kraftfahrzeugs vorgesehen. Die Aufgabe der offenbarten Feder ist es eine günstige, insbesondere eindimensionale Belastungsverhältnisse und hohe Lebensdauer zu ermöglichen. Durch die relativ große Länge der Feder, welche sich über die Gesamte Länge des Dämpfers erstreckt, sowie durch die gewollt gleichmäßige eindimensionale Belastung der gesamten Feder ergibt sich eine Federkennlinie, welche bei zunehmender Belastung eine nur marginale Progressivität aufweist.

Aus der DE 199 62 026 A1 ist eine Tragfeder für eine Dämpferanordnung bekannt, welche zwei wellenförmige Federhälften aufweist, die spiegelbildlich zu einem Schwingungsdämpfer angeordnet sind. Die Federhälften sind radial von dem Schwingungsdämpfer beabstandet und verlaufen axial entlang des Schwingungsdämpfers, wobei die Federelementhälften sich jeweils an einer gegenüberliegenden Seite des Schwingungsdämpfers entlang erstrecken und an den Federelement-Endabschnitten miteinander und mit dem Schwingungsdämpfer verbunden sind. Auch die hier offenbarte Tragfeder ist aus einem Faserverbundwerkstoff ausgeführt und ist für die Verwendung in einer Feder-Dämpfer-Anordnung eines Kraftfahrzeugs vorgesehen. Die Feder ist ebenfalls sehr lang und entwickelt ihre Progressivität erst ziemlich spät, also nach einem größeren Spannweg, was der Lösung des oben beschriebenen Problems zuwider steht.

Der vorliegenden Erfindung liegt die Aufgabe zugrunde, einen Federträger mit einer Tragfeder vorzuschlagen, wobei die Tragfeder leicht, einfach herstellbar, kompakt, einfach montierbar ist und wobei die Tragfeder auf eine einfache Weise an die jeweiligen Anforderungen, wie z.B. eine günstige insbesondere progressive Federcharakteristik oder Länge anpassbar ist.

Zur Lösung dieser Aufgabe wird ein Federträger mit einer Tragfeder, gemäß Patentanspruch 1 vorgeschlagen.

Eine gemäß Patentanspruch 1 ausgeführte Tragfeder ist durch deren einfache Geometrie einfach und kostengünstig herstellbar. Die Tragfeder umfasst mehrere einzelne Federelemente, welche in Richtung der Längsachse des Federträgers aufeinander gestapelt sind. Dadurch ist sie einfach montierbar und auf eine einfache Weise an die jeweiligen Anforderungen anpassbar. Durch den Einsatz von Federelementen mit unterschiedlicher Steifigkeit kann eine Federcharakteristik mit erforderlicher Progressivität erreicht werden. Außerdem kann die Tragfeder durch die Anzahl der Federelemente in ihrer Länge variiert werden.

Weitere vorteilhafte Ausgestaltungen eines erfindungsgemäßen Federträgers mit einer Tragfeder sind in den abhängigen Ansprüchen angegeben.

Gemäß einer vorteilhaften Variante weisen die Schenkel des Federelements jeweils eine Ausnehmung zur zumindest partiellen Aufnahme einer Baugruppe auf. Dies vereinfacht die Montage der Tragfeder an einem Federträger. So kann die Tragfeder zwischen zwei Anlageabschnitte eines Federträgers radial aufgeschoben werden.

Gemäß einer weiteren vorteilhaften Variante sind die Schenkel der benachbarten Federelemente, in deren Endbereichen miteinander verbunden. Wird die Feder belastet, so legen sich die Schenkel der benachbarten Federelemente aufeinander.

Die gemeinsame Auflagefläche der benachbarten Schenkel wird also immer größer, wobei die zwischen der gemeinsamen Auflagefläche der benachbarten Schenkel und dem Verbindungsabschnitt des jeweiligen Federelements liegende freie Abschnitte der Schenkel immer kürzer werden. Das bewirkt bei einer, bezogen auf die Längsachse des Federträgers axialen Belastung der Tragfeder, einen überproportional Progressiven Anstieg der Federkennlinie.

Gemäß einer weiteren Vorteilhaften Variante umfasst der Anlageabschnitt zumindest einen Federteller, zur Anlage der Tragfeder in dem Anlageabschnitt des Federträgers. Dadurch kann die Tragfeder einfach an dem Federträger axial festgelegt werden. Vorteilhafter Weise weist der Federteller eine Anlagefläche zur Abstützung der Tragfeder an dem Federteller auf.

Eine weitere vorteilhafte Ausgestaltung des erfindungsgemäßen Federträgers sieht vor, dass die Tragfeder mittels einer Formschlussverbindung mit dem Federteller zu dem Federträger gesichert ist. Dazu kann der Federteller beispielsweise mit einem Sicherungszapfen und die Tragfeder mit einer Sicherungsausnehmung ausgestattet sein, welche ineinander greifen und eine Formschlussverbindung begünstigen.

Es ist vorteilhaft, die Federelemente aus einem Faserverbundstoff auszuführen, um das Gewicht der Tragfeder zu reduzieren. Um die Stabilität und die Robustheit und die Lebensdauer der Tragfeder zu erhöhen kann diese, gemäß einer weiteren vorteilhaften Ausgestaltung aus einem Organoblech ausgeführt sein.

Anhand der folgenden Figuren soll die Erfindung beispielhaft näher erläutert werden. Es zeigen:
- Fig.1: eine perspektivische Ansicht eines erfindungsgemäßen Federträgers mit einer Tragfeder,
- Fig.2: eine Seitendarstellung des erfindungsgemäßen Federträgers mit einer Tragfeder,
- Fig.3a-d: eine Darstellung einer alternativen Tragfeder für den erfindungsgemäßen Federträger mit einer Tragfeder in mehreren Ansichten
- Fig.4a-d: eine Darstellung eines Federtellers für den erfindungsgemäßen Federträger mit einer Tragfeder in mehreren Ansichten,
- Fig.5a-c: eine Darstellung eines alternativen Federtellers für den erfindungsgemäßen Federträger mit einer Tragfeder in mehreren Ansichten.

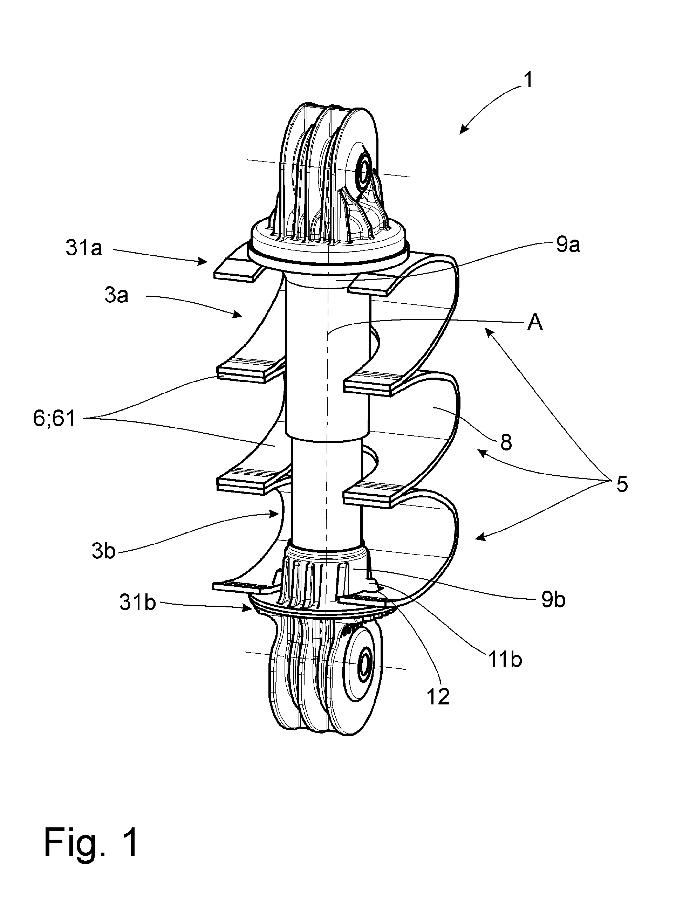

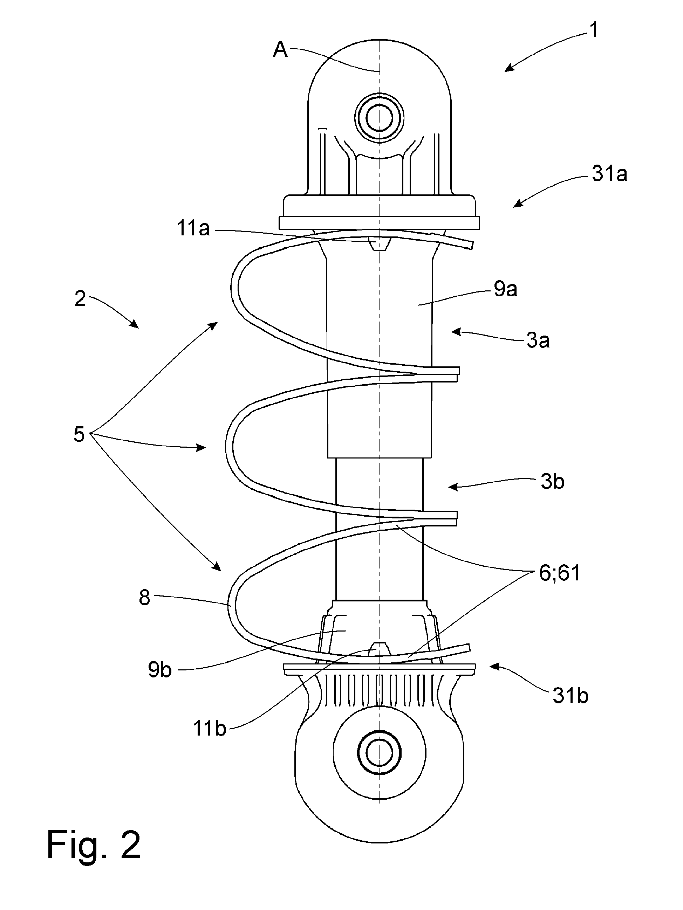

Die Fig. 1 und 2 zeigen jeweils einen Federträger 1 mit einer Tragfeder 2. Der Federträger 1 umfasst zwei teleskopierende Baugruppen 3a; 3b. Die Baugruppen 3a; 3b weisen jeweils einen Anlageabschnitt 31 a; 31 b zur Anlage der Tragfeder 2 an dem Federträger 1.

Die in den Fig. 1; 2 und 3 abgebildete Tragfeder 2 umfasst jeweils drei C-Förmige Federelemente 5. Jedes Federelement 5 ist als ein separates Bauteil ausgeführt und weist zwei Schenkel 6 auf, welche unter Bildung einer C-Form, über einen gekrümmten Verbindungsabschnitt 8 miteinander verbunden sind, wobei die dem Verbindungsabschnitt 8 gegenüberliegende Seite eines jeden Schenkels 6 dessen freies Ende ausbildet. Die Federelemente 5 sind in Richtung der Längsachse A des Federträgers 1 aufeinander gestapelt, wobei die Schenkel 6 der Federelemente 5 gleichsinnig zueinander und quer zu der Längsachse A des Federträgers 1 ausgerichtet sind. Die Verbindungsabschnitte 8 der Federelemente 5 weisen radial, bezogen auf die Längsachse A des Federträgers 1, in die gleiche Richtung. Die freien Enden 61 der Schenkel 6 der Federelemente 5 sind ebenfalls gleichsinnig zueinander, jedoch in die entgegengesetzte Richtung als die Verbindungsabschnitte 8 radial ausgerichtet.

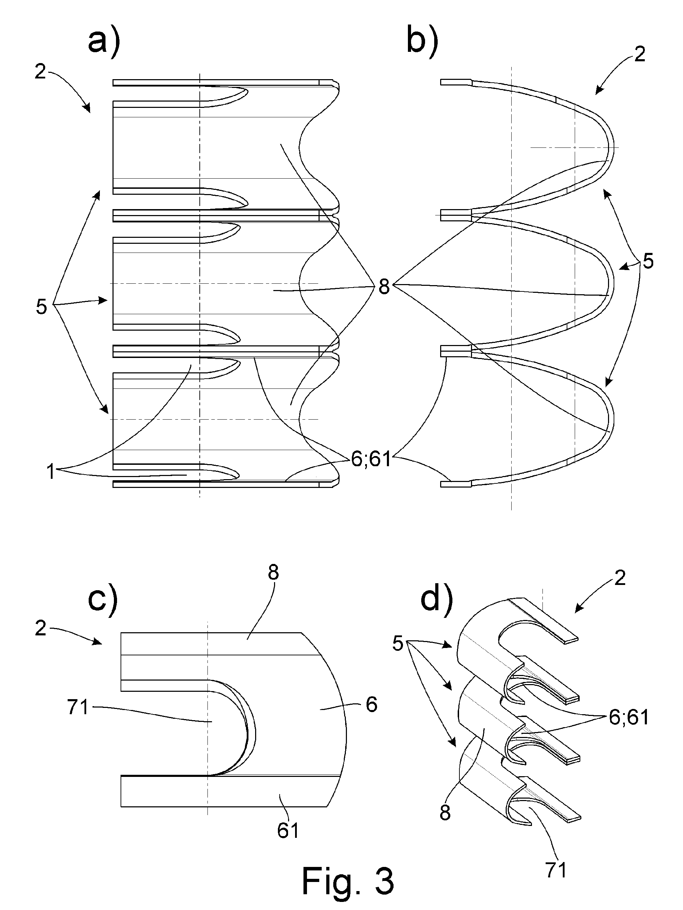

In den Fig. 1; 3a; 3c und 3d ist ersichtlich, dass die Schenkel 6 des Federelements 5 jeweils eine Ausnehmung 71 aufweisen. Bei der in den Fig. 1 und 2 abgebildeten Tragfeder 2 erstreckt sich die Ausnehmung 71, ausgehend von dem freien Ende 61 des Schenkels 6 des Federelements 5 in Richtung des Verbindungsbereichs 8. Die Ausnehmung 71 dient zur Aufnahme der Baugruppen 3a; 3b und vereinfacht die Montage der Tragfeder 2 an dem Federträger 1.

Die Fig. 3a-d zeigen eine alternative Ausgestaltung einer Tragfeder 2. Der Unterschied liegt hier in der Position der an den Schenkeln 6 der Federelemente 5 ausgeführten Ausnehmung 71. Diese ist seitlich, zwischen dem Verbindungsbereich 8 und dem freien Ende 61 der Schenkel ausgeführt. Eine derart ausgeführte Tragfeder 2 umschließt die in der Ausnehmung 71 zu platzierenden Baugruppen 3a; 3b zumindest teilweise und sichert die Tragfeder 2 gegenüber den Baugruppen 3a und 3b gegen ein in Richtung der Verbindungsbereiche 8 gerichtetes radiales Verrutschen.

In den Fig. 2 und 3a-d ist erkennbar, dass die Schenkel 6 der benachbarten Federelemente 5 in deren Endbereichen miteinander verbunden sind. Diese Verbindung kann in Abhängigkeit von dem für die Herstellung der Federelemente eingesetzten Material mittels Kleben, Schrauben, Nieten, Schweißen oder auch mittels einer Formschlussverbindung oder mittels einer anderen bekannten Verbindungsmethode realisiert werden.

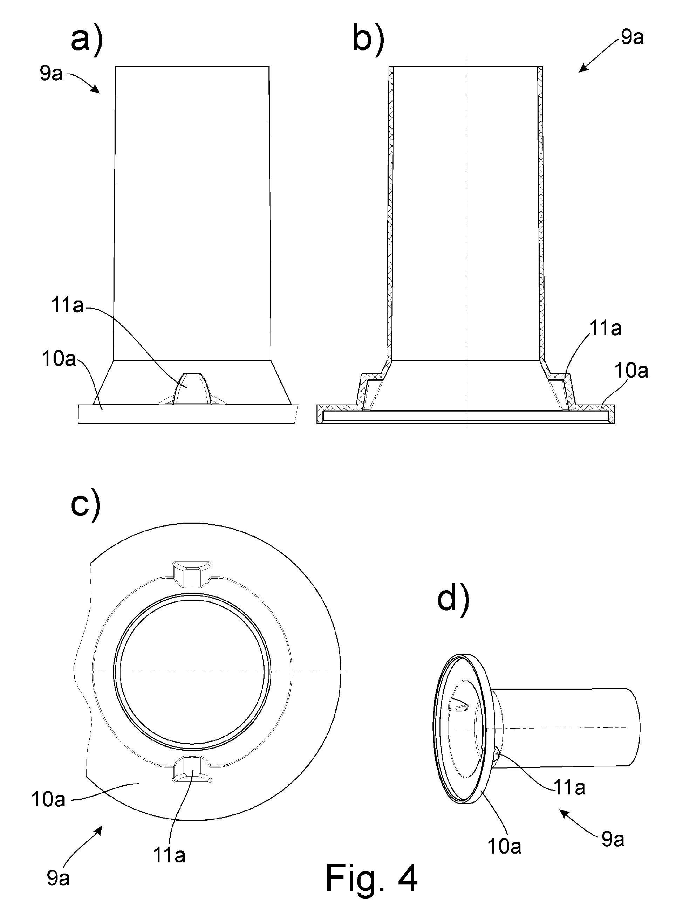

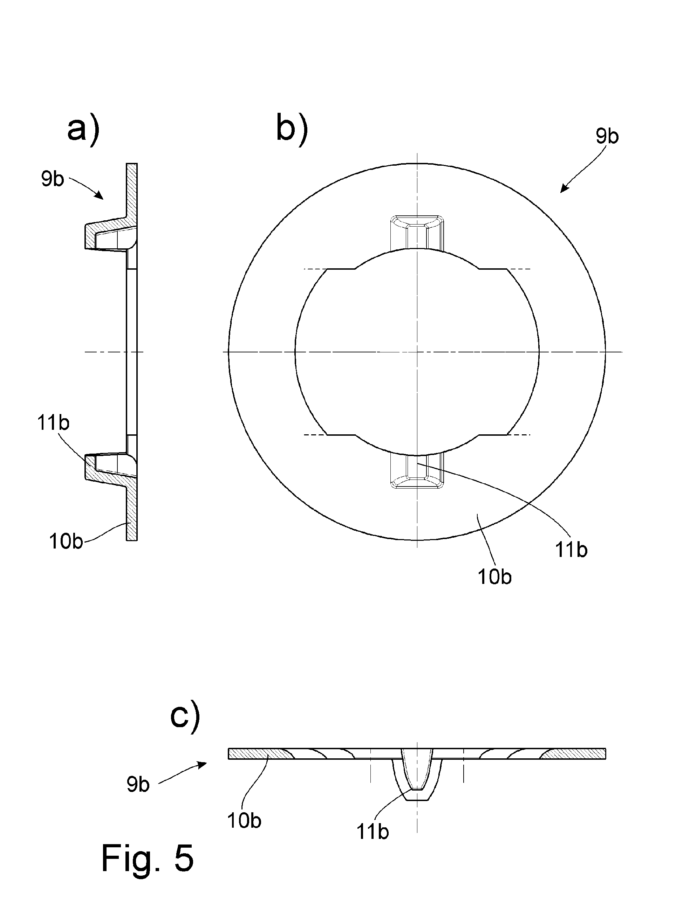

Wie in den Fig. 1 und 2 abgebildet, weisen die Anlageabschnitte 31 a jeweils einen Federteller 9a; 9b auf, welcher der axialen Festlegung der Tragfeder 2 in dem Anlageabschnitt 31 a; 31 b des Federträgers 1 dient. Die Federteller 9a; 9b sind in den Fig. 4a-d und 5a-c nochmals detailliert dargestellt.

Die in den Fig. 1; 2; 4a-d und 5a-c abgebildeten Federteller 9a und 9b weisen jeweils eine Anlagefläche 10a; 10b auf, zur Abstützung der Tragfeder 2 an dem Federteller (9a; 9b).

Des Weiteren zeigen die Fig. 1 und 2 dass die Tragfeder 2 mittels einer Formschlussverbindung mit dem Federteller 9a; 9b an dem Federträger 1 gegen unerwünschtes Verdrehen, oder radiales Verrutschen gesichert ist. Die Formschlussverbindung wurde bei der in den Fig. 1 und 2 gezeigten Ausgestaltung des erfindungsgemäßen Federträgers 1 mit einer Tragfeder 2 dadurch realisiert, dass der Federteller 9a; 9b zwei Sicherungszapfen 11a; 11 b aufweist, welche in die, in den Endbereichen der Tragfeder 2 ausgeführten Sicherungsausnehmungen 12 eingreifen.

### Bezugszeichenliste

- 1: Federträger
- 2: Tragfeder
- 3a; 3b: Baugruppe
- 31 a; 31 b: Anlageabschnitt
- 5: Federelement
- 6: Schenkel
- 61: freies Ende des Schenkels
- 71: Ausnehmung
- 8: Verbindungsabschnitt
- 9a; 9b: Federteller
- 10a; 10b: Anlagefläche
- 11 a; 11 b: Sicherungszapfen
- 12: Sicherungsausnehmung
- A: Längsachse des Federträgers

## Patentansprüche

1. Federträger (1) mit einer Tragfeder (2), umfassend zwei teleskopierende Baugruppen (3a; 3b), wobei die Baugruppen (3a; 3b) jeweils einen Anlageabschnitt (31 a; 31 b) zur Anlage der Tragfeder (2) an dem Federträger (1) aufweisen und wobei die Tragfeder (2) mindestens zwei Federelemente (5) umfasst,
**dadurch gekennzeichnet,**
**dass** jedes Federelement (5) als ein separates Bauteil ausgeführt ist und zwei Schenkel (6) aufweist, welche unter Bildung einer C-Form über einen Verbindungsabschnitt (8) miteinander verbunden sind, wobei die dem Verbindungsabschnitt (8) gegenüberliegende Seite eines jeden Schenkels (6) dessen freies Ende (61) ausbildet und wobei die Federelemente (5) in Richtung einer Längsachse (A) des Federträgers (1) aufeinander gestapelt sind, wobei die Schenkel (6) der Federelemente (5) in der Tragfeder (2) gleichsinnig zueinander und quer zu der Längsachse (A) des Federträgers (1) ausgerichtet sind und wobei die Verbindungsabschnitte (8) der Federelemente (5) bezogen auf die Längsachse (A) des Federträgers (1) radial in die gleiche Richtung weisen und die freien Enden (61) der Schenkel (6) der Federelemente (5) ebenfalls gleichsinnig zueinander, jedoch in die entgegengesetzte Richtung als die Verbindungsabschnitte (8) radial ausgerichtet sind.

2. Federträger mit einer Tragfeder nach Anspruch 1,
**dadurch gekennzeichnet,**
**dass** die Schenkel (6) des Federelements (5) jeweils eine Ausnehmung (71) aufweisen, zur zumindest partiellen Aufnahme einer Baugruppe (31 a; 31 b)

3. Federträger mit einer Tragfeder nach Anspruch 1 oder 2,
**dadurch gekennzeichnet,**
**dass** die Schenkel (6) der benachbarten Federelemente (5) in deren Endbereichen miteinander verbunden sind.

4. Federträger mit einer Tragfeder nach einem der Ansprüche 1 bis 3,
**dadurch gekennzeichnet,**
**dass** der Federträger (1) zumindest einen Federteller (9a; 9b) zur Anlage der Tragfeder (2) in dem Anlageabschnitt (31 a; 31 b) des Federträgers (1) umfasst.

5. Federträger mit einer Tragfeder nach Anspruch 4,
**dadurch gekennzeichnet,**
**dass** der Federteller (9a; 9b) eine Anlagefläche (1 0a; 10b) zur Abstützung der Tragfeder (2) aufweist.

6. Federträger mit einer Tragfeder nach Anspruch 4 oder 5,
**dadurch gekennzeichnet,**
**dass** das Federteller (9a; 9b) einen Sicherungszapfen (11a; 11 b) aufweist.

7. Federträger mit einer Tragfeder nach einem der Ansprüche 1 bis 6,
**dadurch gekennzeichnet,**
**dass** die Tragfeder (2) zumindest eine Sicherungsausnehmung (12) aufweist.

8. Federträger mit einer Tragfeder nach einem der Ansprüche 1 bis 7,
**dadurch gekennzeichnet,**
**dass** die Tragfeder (2) mittels einer Formschlussverbindung mit dem Federteller (9a; 9b) zu dem Federträger (1) gesichert ist.

9. Federträger mit einer Tragfeder nach einem der Ansprüche 1 bis 8,
**dadurch gekennzeichnet,**
**dass** die Federelemente (5) aus einem Faserverbundstoff ausgeführt sind.

10. Federträger mit einer Tragfeder nach einem der Ansprüche 1 bis 9,
**dadurch gekennzeichnet,**
**dass** die Federelemente (5) aus einem Organoblech ausgeführt sind.
